Europäisches Patentamt

(19) European Patent Office

Office européen des brevets

(11) Publication number: **0 223 889 B1**

# (12) EUROPEAN PATENT SPECIFICATION

(45) Date of publication of patent specification:
06.02.91 Bulletin 91/06

(51) Int. Cl.$^5$: **C08F 210/00, C08F 4/64**

(21) Application number: **85308490.3**

(22) Date of filing: **21.11.85**

(54) **Process for polymerisation of alpha-olefins with ziegler type catalyst system.**

(43) Date of publication of application:
03.06.87 Bulletin 87/23

(45) Publication of the grant of the patent:
06.02.91 Bulletin 91/06

(84) Designated Contracting States:
**BE DE FR GB IT NL**

(56) References cited:
**FR-A- 2 152 503**

(73) Proprietor: **Pony Industries Incorporated
204 East 39th Street
New York, New York 10016 (US)**

(72) Inventor: **Hostetler, Donald Edmund
206 Joy Lane
West Chester Pennsylvania 19380 (US)**
Inventor: **Kostelnik, Robert James
914 Oakbourne Road
West Chester Pennsylvania 19382 (US)**
Inventor: **In, Zung-Jung Shanti
1117 Stoneybrook Lane
West Chester Pennsylvania 19382 (US)**

(74) Representative: **Cropp, John Anthony David et ai
MATHYS & SQUIRE 10 Fleet Street
London, EC4Y 1AY (GB)**

## Description

### FIELD OF THE INVENTION

This invention relates to the preparation of alpha-olefin copolymers and more particularly to the preparation of alpha-olefin copolymers having improved hydrocarbon oil pipeline friction-reducing properties.

### PRIOR ART

When fluids are pumped through a conduit, such as a pipeline, friction resulting from the movement of the fluid over the inside surface of the conduit causes a pressure drop in the fluid which increases as the downstream distance from the pump increases. The pressure drop results in reduced flow rates. It is known that the flow rate of the fluid through the conduit can be increased by reducing the friction of the fluid in the conduit.

Hydrocarbon fluid frictional loss in conduits can be reduced by injecting into the fluid polymeric substances which are capable of reducing the friction loss of the fluid moving through the conduit. It has been reported that alpha-monoolefin polymers are particularly useful for reducing friction loss in hydrocarbons such as crude oil flowing through pipelines. U.S. Patent No. 3,692,676 discloses the reduction of friction loss in hydrocarbon liquids flowing through pipelines by adding to such liquids small amounts of homopolymers or copolymers of alpha-olefins having from 6 to 20 carbon atoms. U.S. Patents 3,351,079 ; 3,493,000; 3,559,664 and 3,682,187, disclose the addition of polyethylene or copolymers of ethylene and propylene or other low molecular weight alpha-monoolefins to hydrocarbon fluids to reduce fluid friction loss. U.S. Patent 4527581 discloses the addition of copolymers of butene-1 and at least one other alpha-monoolefin to a hydrocarbon fluid flowing in a pipeline to reduce frictional loss.

Even though such additives may effect drag reduction in hydrocarbon liquids flowing through conduits their use is expensive because of their high costs and the large quantities of them required in continuous use applications. Accordingly, improvements which lower the cost of use of these drag reducing agents, such as increasing their efficiency, are continuously sought.

U.S. Patent Nos. 2,976,271 and 2,983,720 disclose the polymerization of propylene and butene-1, respectively, by means of a three component catalyst comprised of aluminumtrialkyl, aluminumdialkyl monohalide and a reducible compound of titanium, such as titanium tetrachloride. U.S. Patent No. 2,971,925 discloses the preparation of polymers of monoolefins having a high degree of linearity by polymerizing monoolefins in the presence of catalyst prepared by reacting aluminumtriethyl and titanium tetrachloride and reacting the resulting product with a hydrocarbon solution of aluminumdiethyl chloride. U.S. Patent No. 2,943,063 discloses the polymerization of olefins in the presence of a catalyst comprised of combinations of titanium tetrahalide with trialkylaluminum or dialkylaluminum halide. U.S. Patent 3,222,295 discloses the preparation of monoolefin polymerization catalysts by reacting a titanium tetrahalide with a dialxylaluminum halide and reacting the resulting complex with an aluminumtrialkyl compound. U.S. Patents 3,257,368, 3,261,821 and 3,281,375 teach the preparation of alphamonoolefin polymers by a catalyst prepared by reacting a solution of aluminumtriethyl and titanium tetrachloride with aluminumdialkyl halides. U.S. Patent 3,723,350 discloses olefin polymerization catalysts made by reducing a mixture of metallic halides, including a titanium tetrachloride with a dialkylaluminum halide and reacting the reduction product with an aluminumtrialkyl, an alkylaluminum halide and/or a dialkylaluminum halide.

The above references show the use of trialkylaluminum compounds and dialkylaluminum halides alone or in combination as activators for alpha-monoolefin catalyst polymerizations. It has been observed that the rate of polymerization of alpha-monoolefin catalyzed by Ziegler catalysts which are activated by dialkylaluminium halide is relatively low.

FR-A-2152503 describes processes for the polymerization of $\alpha$-olefins using a Ziegler-type catalyst system in which the catalyst promoter includes an alkyl aluminum alkoxide of the formula $R^1{}_nAl(OR^1)_{3-n}$ where $R^1$ is hydrocarbyl and n is from 0.5 to 2 and illustrates the use of a 50 : 50 mixture of diethyl aluminum ethoxide and ethyl aluminum diethoxide in admixture with a second aluminum compound which may be dialkyl aluminum halide. However, the objective of including the alkyl aluminum alkoxide is to improve the activity of hydrogen as a chain transfer agent and there is no suggestion of increasing polymerization rate or any discussion of the problem of producing hydrocarbon conduit friction reducing agents.

### SUMMARY OF THE INVENTION

A method of improving the efficiency of Ziegler-catalysed polymerization of alpha-monoolefin has now been discovered. The present invention provides an improved method of producing alpha-monoolefin polymer hydrocarbon conduit friction reducing agents and a method of reducing the polymerization time required for producing alpha-monolefin polymers.

In accordance with the teachings of the invention the polymerization time required for preparing alpha-monoolefin polymers prepared in an inert solvent by the Ziegler polymerization process is shortened significantly by conducting the polymerization in the presence of a mixture of at least one dialkylaluminum halide and at least one dialkylaluminum alkoxide compound.

Thus, according to the present invention, there is provided a process for preparing a hydrocarbon fluid friction reducing composition comprising mixing two or more alpha-monoolefins having at least 4 but not more than 30 carbon atoms in a diluent or an organic solvent and copolymerising the alpha-monoolefins in the presence of a catalyst comprising a compound of a metal of Groups IV-B, V-B or VIII of the Periodic Chart and an organo metal catalyst activator comprising 5 to 99 moles of at least one dialkylaluminum halide compound, each alkyl group of which has 1 to 10 carbon atoms and 95 to 1 moles of at least one dialkylaluminum alkoxide compound, each alkyl group and the alkoxide group of which has 1 to 10 carbon atoms, the mole ratio of activator to catalyst in the reaction mixture being in the range of 0.001 : 1 to 50 : 1 and the catalyst activator being free of monoalkylaluminum dialkoxide.

In preferred embodiments of the invention the dialkylaluminum halide is diethylaluminum chloride, the dialkylaluminum alkoxide is diethylaluminum ethoxide and the preferred alpha-monoolefin monomer reactants are those having 4 to 16 carbon atoms.

## DETAILED DESCRIPTION OF THE INVENTION

The improved polymers of the invention are prepared from alpha-monoolefins having 4 to 30 or more carbon atoms. Alpha-monoolefins having more than 30 carbon atoms can be used in the preparation of hydrocarbon pipeline friction-reducing agents but they are not usually employed due to their lower reactivities. Generally, highly favorable results have been observed when the friction reducing polymers are prepared from alpha-monoolefins having 4 to 20 carbon atoms. These monomers are preferred for use in the process of the invention since they are most easily polymerized to high molecular weight polymers under liquid state polymerization conditions. The most preferred monomers are those prepared from butene-1 and at least one other alpha-monoolefin. having 5 to 16 carbon atoms. The polymeric compositions of the invention are prepared from two or more than two alpha-monoolefins. When two alpha-monoolefin component systems are employed each alpha-monoolefin component is usually present in the reaction mixture in an amount sufficient to produce a copolymer containing at least 10 mole percent of each component. In a preferred embodiment of the two alpha-monoolefin component system each component is present in an amount sufficient to produce copolymers containing 25 or more mole percent of each component. In three or more alpha-monoolefin component systems it is preferred that the maximum content of any one monomer is 90 mole percent and most preferably 75 mole percent, based on the total number of moles of alpha-monoolefin monomer present in the reaction mixture.

Examples of two component polymer systems are butene-1-dodecene-1 copolymer, butene-1-decene-1 copolymer, hexene-1-dodecene-1 copolymer, and octene-1-tetradecene-1 copolymer. Examples of three component systems include butene-1-decene-1-dodecene-1 terpolymer. Preferred specific polymers include polyhexene-1, polyoctene-1, polydecene-1, polydodecene-1, polytetradecene-1, butene-1-decene-1 copolymer, butene-1-dodecene-1 copolymer, and hexene-1-dodecene-1 copolymer.

The process of the invention can be practiced employing batch or continous techniques using suitably equipped reaction vessels for the polymerization. Stainless steel and glass-lined reactors are preferred to ordinary steel vessels, since they permit easier control of product quality. Suitable reaction vessels are those equipped with agitator or other mixing means capable of maintaining the reaction mixture uniformly distributed, and cooling means sufficient to maintain the reacting polymerization mixture at the desired temperature in the reaction zone.

The polymerization reaction is desirably at least partially carried out in the presence of an inert solvent or diluent for the polymeric product. The early stage of the polymerization may be carried out by mass polymerization, i.e. the monomer charge can serve as the polymerization medium. However, as the polymerization proceeds the viscosity of the reaction mixture increases because of the formation of polymer and it often becomes increasingly more difficult to provide adequate mixing to dissipate the heat built up during the reaction, which is exothermic. It may then become necessary to form a solution or slurry of the reaction mixture by adding an inert solvent or diluent to the reaction mixture to facilitate temperature and product uniformity control. Suitable solvents and diluents include, kerosene, naphtha, petroleum distillate, and alkanes having 6 to 10 carbon atoms, such as heptane, octane, and mixtures of these.

The polymerization is carried out by the Ziegler process using a catalyst comprising one or more reducible or reduced heavy metal compounds and a catalyst activator comprised of at least one dialkylaluminum alkoxide and at least one dialkylaluminum halide compound. Reducible heavy metal compounds suitable for use in the invention include the halides, oxyhalides, and acetyl acetonates. of the metals of Groups IV-B, V-B, or VIII of the Periodic Chart of the Elements found on pages 392-393 of the Handbook of Chemistry and Physics, 37th Edition. Suitable reducible compounds for use as the catalyst include the tetravalent compounds of titanium and zirconium, and the compounds of vanadium, niobium, cobalt, and nickel. Preferred catalysts are the reducible or reduced compounds of titanium, zirconium, vanadium and niobium. Examples of typical reducible catalysts include the halides of titanium and zirconium, such as $TiCl_4$, and $ZrCl_4$, and the oxyhalides of vanadium and niobium, such as $VOCl_3$. Preferred reducible compounds include $TiCl_4$, and $ZrCl_4$. The catalysts can be reduced by, for example, organic compounds of aluminum. Examples of preferred reduced compounds include $TiCl_3$, $TiBr_3$, and $TiCl_3 \cdot 1/3AlCl_3$.

The alkyl groups in the dialkyl aluminum halide compound may be the same or different and each may be straight- or branched-chain and contain 1 to 10 carbon atoms. In a preferred embodiment each alkyl group has 2 to 6 carbon atoms and in the most preferred embodiment each alkyl group has 2 to 4 carbon atoms. The halide may be any of the halides, i.e. bromide, chloride, iodide or fluoride. Bromides, chlorides or iodides are most commonly used and the preferred halide is chloride. Examples of typical dialkylaluminum halide compounds include diethyl aluminum chloride, diethylaluminum bromide, ethylmethylaluminum chloride, butylpropylaluminum iodide, dihexylaluminum chloride, dioctylaluminum bromide, didecylaluminum iodide, bis(3-ethylhexyl)aluminum chloride, and diethylaluminum fluoride. Preferred dialkylaluminum halides include diethylaluminum chloride, diethylaluminum bromide, diethylaluminum iodide, dipropylaluminum chloride, and ethylpropylaluminum chloride.

The alkyl groups in the dialkylaluminum alkoxide compounds used in the invention may be the same or different and each may be straight or branched-chain and contain 1 to 10 carbon atoms. The alkoxide group may be linear or branch chained and generally contains 1 to 10 carbon atoms. In a preferred embodiment the alkyl group and the alkoxide group each have 1 to 6 carbon atoms and in the most preferred embodiment each alkyl group has 2 to 4 carbon atoms. Examples of typical dialkylaluminum alkoxides include dimethyl luminum methoxide, diethylaluminum ethoxide, diethylaluminum propoxide, dihexylaluminum ethoxide, didecylaluminum pentoxide, and ethylmethylaluminum ethoxide.

Preferred dialkylaluminum alkoxides include dimethylaluminum ethoxide, diethylaluminum ethoxide diethylaluminum propoxide, and ethylmethylaluminum ethoxide.

The total amount of dialkylaluminum halide compound and dialkylaluminum alkoxide activator used in the polymerization varies from the minimum amount effective to activate the catalyst up to 50 moles or more per each mole of catalyst used in the polymerization. Amounts as small as 0.001 mole of activator per mole of catalyst are often effective to produce the desired result. Activator in excess of 50 moles per mole of catalyst is usually wasteful and provides no additional advantages. The preferred lower limit of activator is often 0.01 mole and the most preferred lower limit is 0.1 mole per mole of catalyst. The upper activator limit preferably does not exceed 25 moles and most preferable does not exceed 10 moles per mole of catalyst used in the polymerization reaction.

The relative amounts of dialkylaluminum halide and dialkylaluminum alkoxide in the activator system generally vary from 5 moles of dialkylaluminum halide per each 95 moles of dialkylaluminum alkoxide to 99 moles of dialkylaluminum halide per each 1 mole of dialkylaluminum alkoxide. In preferred embodiments of the invention the mole ratio range of dialkylaluminum halide to dialkylaluminum alkoxide is 80 : 20 to 20 : 80.

Other additives such as chain transfer agents can be added to the reaction mixture as desired.

A typical polymerization according to the preferred embodiment is carried out as follows. A suitably equipped reaction vessel is flushed with nitrogen sufficiently long to purge the reactor of oxygen, and the monomers, solvent (if solvent is initially charged) and activators are charged to the reactor. The reactor is then blanketed with nitrogen and sealed. The temperature of the reactor contents is adjusted to the desired polymerization temperature, typically in the range of –20 to 30°C, the catalyst is charged, and the reactor is pressurized to about $3.4 \times 10^5$ Pa gange (50 psig) with nitrogen. As the viscosity builds up an inert solvent such as kerosene or an inert diluent may, if desired, be added to the reaction vessel in a quantity sufficient to maintain the reactor contents in an easily stirrable condition. The polymerization is permitted to continue until the desired conversion of monomer to polymer is achieved. The reaction is terminated by adding an agent to deactivate the catalyst. Suitable deactivating agents include alcohols, such as methyl or isopropyl alcohol. The polymeric product can be recovered from the reaction mixture by precipitation using excess alcohol or it can be used directly as a slurry or solution. Additional details of the product and its method of use can be obtained from U.S. Patent 4527581, mentioned above.

The invention is further illustrated in the following examples, in which parts and percentages are on a weight basis, unless otherwise indicated.

In testing the polymers prepared in the following examples for hydrocarbon fluid friction reducing effectiveness the following procedure was followed. The hydrocarbon test fluid, hexane, was pumped through a test line 6.35 mm (1/4 inch) in diameter and 0.91 m (3 feet) long at conditions which resulted in a Reynolds number of about 12,600. The amount of polymer added to the hexane in each test was 2 parts per million (ppm). The percentage drag reduction was calculated using the following equation

$$\% \; \text{drag reduction} = \frac{Po - Ps}{Po} \times 100$$

wherein Po is the measured pressure drop occurring when hexane without drag reducing agent was pumped through the test line and Ps in the measured pressure drop occurring when the hexane containing drag reducing agent was pumped through the test line.

EXAMPLE I (Comparative)

A 0.47 $\ell$ (one pint) citrate bottle equipped with a teflon-coated stirring bar was purged with dry nitrogen and charged with 82 g of mineral spirits (sold by Humble Oil and Refining Company under the trademark Isopar H), 3.0 mls of a 0.5 molar solution (1.5 millimoles) of diethyl aluminum chloride (DEAC) in Isopar H and 0.10 g of aluminum activated titanium trichloride ($TiCl_3 \cdot 1/3AlCl_3$, sold by Stauffer Chemical Company under the designation Type 1.1). The aluminum activator to titanium molar ratio was 3 : 1. The bottle was capped with a perforated metal cap over a neoprene rubber seal and placed in a water bath at 1°C. With stirring the polymerization was initiated by charging 13.6 g of dodecene-1 and 2.4 g of octene-1 to the bottle. The polymerization was permitted to run for 31 hours after which it was terminated by adding sufficient alcoholic potassium hydroxide to completely deactivate the catalyst.

Drag reduction performance data was obtained on the polymer formed. Reaction and drag reduction performance data are tabulated in the Table.

EXAMPLE II (Comparative)

The procedure of EXAMPLE I was repeated except that 1.5 millimoles of diethylaluminum ethoxide was substituted for the DEAC solution. Polymerization and drag reduction performance data obtained on the resulting polymer are tabulated in the Table.

EXAMPLE III

The procedure of EXAMPLE I was repeated except that 2.4 g of a 0.5 molar solution containing 2 parts of DEAC and 1 part of diethylaluminum ethoxide (on a molar basis) was substituted for the DEAC. Polymerization and drag reduction performance data are tabulated in the Table.

## TABLE

| Example | Activator | Polymer % | Inherent Viscosity(1) | Reactor Time, Hours | % Drag Reduction |
|---------|-----------|-----------|-----------------------|---------------------|------------------|
| I | DEAC | 10.0 | 7.2 | 31 | 10 |
| II | DEAEO | 0 | - | 72 | - |
| III | DEAC&DEAEO | 7.4 | 9.8 | 7 | 28.5 |

(1) Inherent Viscosity was determined at 25°C in a 3 bulb Cannon-Ublohde viscometer at 0.1g polymer/dl.

The above examples illustrate the benefits of the invention. In Example I, in which diethylaluminum chloride was used as the sole catalyst activator the reaction time was 31 hours and the % drag reduction was 10. In Example II, the sole catalyst activator was DEAEO. The reaction was carried out for 72 hours but no polymer was produced. In Example III, which illustrates the invention, a polymer was prepared using a mixture of diethylaluminum chloride and diethylaluminum ethoxide. The polymerization time was only 7 hours and the drag reduction observed when the Example III polymer was used was 28.5%. Example 3 shows that the polymerization time is significantly reduced when the activator of the invention is used. The resulting polymer provided superior drag reduction.

Although the invention is described with particular reference to specific examples, it is understood that alternate embodiments are contemplated. For example more than one dialkylaluminum halide and/or dialkylaluminum alkoxide catalyst activator can be used in the polymerization reaction or mixtures of catalysts can be employed. Furthermore, the polymers can be used to reduce friction in the pumping of other hydrocarbon fluids, such as crude oil. The scope of the invention is limited only by the breadth of the appended claims.

## Claims

1. A process for preparing a hydrocarbon fluid friction reducing composition comprising mixing two or more alpha-monoolefins having at least 4 but not more than 30 carbon atoms in a diluent or an organic solvent and copolymerising the alpha-monoolefins in the presence of a catalyst comprising a compound of a metal of Groups IV-B, V-B, or VIII of the Periodic Chart and an organo metal catalyst activator comprising 5 to 99 moles of at least one dialkylaluminum halide compound, each alkyl group of which has 1 to 10 carbon atoms and 95 to 1 moles of at least one dialkylaluminum alkoxide compound, each alkyl group and the alkoxide group of which has 1 to 10 carbon atoms, the mole ratio of activator to catalyst in the reaction mixture being in the range of 0.001 : 1 to 50 : 1 and the catalyst activator being free of monoalkylaluminum dialkoxide.

2. A process as claimed in Claim 1 wherein said alpha-monoolefins have 4 to 20 carbon atoms and said organic solvent is selected from kerosene, naphtha, petroleum distillate, alkanes having 6 to 10 carbon atoms and mixtures of these.

3. A process as claimed in Claim 2 wherein said alpha-monoolefins comprise butene-1 and at least one other alpha-monoolefin having 5 to 16 carbon atoms.

4. A process as claimed in Claim 3 wherein said other alpha-monoolefin is selected from hexene-1, octene-1, decene-1, dodecene-1, tetradecene-1 and mixtures of these.

5. An improved process as claimed in any one of Claims 1 to 4 wherein said catalyst is selected from titanium halides, zirconium halides, vanadium oxyhalides, niobium oxyhalides and mixtures of these.

6. A process as claimed in any one of Claim 1 to 5 wherein the ratio of activator to catalyst is in the range of 0.01 to 25 moles of activator per mole of catalyst, and the mole ratio of total dialkylaluminum halide compound to total dialkylaluminum alkoxide compound is in the range of 20 : 80 to 80 : 20, and each alkyl group in the dialkylaluminum halide compound and each alkyl group and the alkoxide group in the dialkylaluminum alkoxide compound has 2 to 6 carbon atoms.

7. A process as claimed in Claim 6 wherein said catalyst is selected from titanium tetrachloride, titanium trichloride, and mixtures of these.

8. A process as claimed in Claim 7 wherein said dialkylaluminum halide compound is diethylaluminum chloride and said dialkylaluminum alkoxide compound is diethylaluminum ethoxide.

9. The use as a hydrocarbon fluid friction reducing composition of a copolymer obtained by the process as claimed in any one of Claims 1 to 8.

## Ansprüche

1. Verfahren zur Herstellung einer Zusammensetzung, die die Reibung einer Kohlenwasserstoff-Flüssigkeit vermindert, bei dem man zwei oder mehr α-Monoolefine mit mindestens 4 und nicht mehr als 30 Kohlenstoffatomen in einem Verdünnungsmittel oder einem organischen Lösungsmittel vermischt und die α-Monoolefine in Gegenwart eines Katalysators copolymerisiert, der eine Verbindung eines Metalls der Gruppen IV-B, V-B oder VIII des Periodischen Systems und einen Organometallkatalysatoraktivator enthält, der 5 bis 99 Mol mindestens einer Dialkylaluminiumhalogenidverbindung, wobei jede Alkylgruppe 1 bis 10 Kohlenstoffatome aufweist und 95 bis 1 Mol mindestens einer Dialkylaluminiumalkoxidverbindung enthält, wobei jede Alkylgruppe und die Alkoxidgruppe 1 bis 10 Kohlenstoffatome aufweist, wobei das Molverhältnis von Aktivator zu Katalysator in der Reaktionsmischung im Bereich von 0,001 : 1 bis 50 : 1 beträgt und der Katalysatoraktivator frei von Monoalkylaluminumdialkoxid ist.

2. Verfahren nach Anspruch 1, bei dem die α-Monoolefine 4 bis 20 Kohlenstoffatome aufweisen und das organische Lösungsmittel aus Kerosin, Naphtha, Erdöldestillat, Alkanen mit 6 bis 10 Kohlenstoffatomen und deren Mischungen ausgewählt wird.

3. Verfahren nach Anspruch 2, bei dem die α-Monoolefine Buten-1 und mindestens ein anderen α-Monoolefin mit 5 bis 16 Kohlenstoffatomen enthalten.

4. Verfahren nach Anspruch 3, bei dem das andere α-Monoolefin aus Hexen-1, Octen-1, Decen-1, Dodecen-1, Tetradecen-1 und deren Mischungen ausgewählt wird.

5. Verbessertes Verfahren nach einem der Ansprüche 1 bis 4, bei dem der Katalysator aus Titanhalogeniden, Zirkoniumhalogeniden, Vanadiumoxyhalogeniden, Nioboxyhalogeniden und deren Mischungen ausgewählt wird.

6. Verfahren nach einem der Ansprüche 1 bis 5, bei dem das Verhältnis des Aktivators zum Katalysator im Bereich von 0,01 bis 25 Mol des Aktivators pro Mol des Katalysators beträgt und das Molverhältnis der gesamten Dialkylaluminiumhalogenidverbindung zur gesamten Dialkylaluminiumalkoxidverbindung im Bereich von 20 : 80 bis 80 : 20 liegt und jede Alkylgruppe in der Dialkylaluminiumhalogenidverbindung und jede Alkylgruppe und die Alkoxidgruppe in der Dialkylaluminiumalkoxidverbindung 2 bis 6 Kohlenstoffatome aufweisen.

7. Verfahren nach Anspruch 6, bei dem der Katalysator aus Titantetrachlorid, Titantrichlorid und deren Mischungen ausgewählt wird.

8. Verfahren nach Anspruch 7, bei dem die Dialkylaluminiumhalogenidverbindung Diethylaluminiumchlorid ist und die Dialkylaluminiumalkoxidverbindung Diethylaluminiumethoxid ist.

9. Verwendung von einem Copolymer, erhalten nach dem Verfahren wie in einem der Ansprüche 1 bis 8 beansprucht, als die Reibung einer Kohlenwasserstoff-Flüssigkeit vermindernde Zusammensetzung.

## Revendications

1. Procédé pour préparer une composition réduisant le frottement d'un fluide hydrocarboné, caractérisé en ce qu'il comprend le mélange de deux ou plusieurs alpha-monooléfines ayant au moins 4 mais pas plus de 30 atomes de carbone dans un diluant ou un solvant organique et la copolymérisation des alpha-monooléfines en présence d'un catalyseur comprenant un composé d'un métal des groupes IV-B, V-B ou VIII du Tableau Périodique et un activateur de catalyseur organométallique comprenant 5 à 99 moles d'au moins un composé halogénure de dialkylaluminium, dont chaque groupe alkyle a 1 à 10 atomes de carbone et 95 à 1 moles d'au moins un composé alcoolate de dialkylaluminium, dont chaque groupe alkyle et le groupe alcoolate a 1 à 10 atomes de carbone, le rapport molaire de l'activateur au catalyseur dans le mélange réactionnel étant dans la gamme de 0,001 : 1 à 50 : 1 et l'activateur de catalyseur étant dépourvu de dialcoolate de monoalkylaluminium.

2. Procédé suivant la revendication 1, caractérisé en ce que ces alpha-monooléfines ont 4 à 20 atomes de carbone et que ce solvant organique est choisi parmi un kérosène, un naphta, un distillat de pétrôle, des alcanes ayant 6 à 10 atomes de carbone et leurs mélanges.

3. Procédé suivant la revendication 2, caractérisé en ce que ces alpha-monooléfines comprennent du butène-1 et au moins une autre alpha-monooléfine ayant 5 à 16 atomes de carbone.

4. Procédé suivant la revendication 3, caractérisé en ce que cette autre alpha-monooléfine est choisie parmi l'hexène-1, l'octène-1, le décène-1, le dodécène-1, le tétradécène-1 et leurs mélanges.

5. Procédé amélioré suivant l'une quelconque des revendications 1 à 4, caractérisé en ce que ce catalyseur est choisi parmi des halogénures de titane, des halogénures de zirconium, des oxyhalogénures de vanadium, des oxyhalogénures de niobium et leurs mélanges.

6. Procédé suivant l'une quelconque des revendications 1 à 5, caractérisé en ce que le rapport de l'activateur au catalyseur est dans la gamme de 0,01 à 25 moles d'activateur par mole de catalyseur et que le rapport molaire du composé halogénure de dialkylaluminium total au composé alcoolate de dialkylaluminium total est dans la gamme de 20 : 80 à 80 : 20 et chaque groupe alkyle dans le composé halogénure de dialkylaluminium et chaque groupe alkyle et le groupe alcoolate du composé alcoolate de dialkylaluminium a 2 à 6 atomes de carbone.

7. Procédé suivant la revendication 6, caractérisé en ce que ce catalyseur est choisi parmi le tétrachlorure de titane le trichlorure de titane et leurs mélanges.

8. Procédé suivant la revendication 7, caractérisé en ce que ce composé halogénure de dialkylaluminium est le chlorure de diéthylaluminium et que ce composé alcoolate de dialkylaluminium est l'éthylate de diéthylaluminium.

9. Utilisation en tant que composition réduisant le frottement d'un fluide hydrocarboné, d'un copolymère obtenu par le procédé suivant l'une quelconque des revendications 1 à 8.